(19) Europäisches Patentamt
European Patent Office
Office européen des brevets

(11) EP 3 864 059 B1

(12) EUROPEAN PATENT SPECIFICATION

(45) Date of publication and mention of the grant of the patent:
**14.01.2026 Bulletin 2026/03**

(21) Application number: **19871019.6**

(22) Date of filing: **10.10.2019**

(51) International Patent Classification (IPC):
***C08F 236/10*** *(2006.01)* ***C08F 4/56*** *(2006.01)*
***C08C 19/22*** *(2006.01)* ***C08C 19/25*** *(2006.01)*
***C08C 19/44*** *(2006.01)*

(52) Cooperative Patent Classification (CPC):
(C-Sets available)
**C08C 19/44; C08C 19/22; C08C 19/25; C08F 236/10** (Cont.)

(86) International application number:
**PCT/US2019/055583**

(87) International publication number:
**WO 2020/077063 (16.04.2020 Gazette 2020/16)**

# (54) MODIFIED DIENE COPOLYMERS WITH TARGETED AND STABILIZED VISCOSITY

MODIFIZIERTE DIENCOPOLYMERE MIT GEZIELTER UND STABILISIERTER VISKOSITÄT

COPOLYMÈRES DE DIÈNE MODIFIÉS AYANT UNE VISCOSITÉ CIBLÉE ET STABILISÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2018 US 201862744897 P**

(43) Date of publication of application:
**18.08.2021 Bulletin 2021/33**

(73) Proprietor: **Firestone Polymers, LLC**
**Akron, Ohio 44301 (US)**

(72) Inventors:
- **ASKEY, Brian P.**
  **Olmsted Township, Ohio 44138 (US)**
- **YOSHIZAWA, Takahiro**
  **Tokyo 187-0031 (JP)**
- **HOGAN, Terrence E.**
  **Uniontown, Ohio 44685 (US)**

(74) Representative: **Marks & Clerk LLP**
**15 Fetter Lane**
**London EC4A 1BW (GB)**

(56) References cited:
**WO-A1-2018/125733**
**WO-A2-2015/089356**
**US-A1- 2009 054 549**
**US-A1- 2010 006 199**
**US-A1- 2012 259 056**
**US-A1- 2014 031 471**
**US-A1- 2016 009 903**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 236/10, C08F 4/48;**
C08F 236/06, C08F 212/08

## Description

### FIELD OF THE INVENTION

Embodiments of the invention are generally directed toward modified diene copolymers having a targeted and stabilized viscosity. In particular embodiments, the diene copolymers are modified by reaction with an imine group-containing hydrocarbyloxy silane and subsequently stabilized with a hydrocarbyloxy silane.

### BACKGROUND OF THE INVENTION

In the manufacture of tires, especially tire treads, it is known to employ modified polymers, such as those including end functionalization. It has been observed that rubber vulcanizates prepared with these modified polymers exhibit reduced hysteretic loss and show reduced Payne effect, which is the loss of mechanical energy resulting from filler deagglomeration.

Polymer modification is often achieved by reacting a living polymer species with a compound that can impart a functional group to the end of the polymer chain. For example, U.S. Patent No. 6,369,167 teaches preparing diene polymer, such as random copolymers of butadiene and styrene, through anionic polymerization techniques, and then terminating the polymer with an imine-containing hydrocarbyloxy silane compound. The terminating compound, which is also referred to as a terminal modifier, is employed in amounts from 0.25 to 3 mole per mole of organolithium compound used to initiate the anionic polymerization.

Similar terminal modifiers are disclosed in U.S. Patent No. 7,683,151, which teaches using 0.3 mol equivalent or more based on the apparent active site. Following the modification reaction, this patent teaches the addition of a condensation accelerator (*e.g.*, a tin carboxylate) to effect condensation (which yields polymer coupling) of the hydrocarbyloxy silane residue at the polymer chain end. After finishing, the resultant modified polymer has a Mooney viscosity ($ML_{1+4}$@ 100 °C) of 10 to 150.

The hydrocarbyloxy silane residue has been found to cause increases in aged Mooney viscosity, which increases are believed to result from coupling that occurs between functional polymers in the presence of water. This coupling is believed to be initiated when water hydrolyzes a hydrocarbyloxy silane substituent to form a siloxy substituent, and then the siloxy substituent of respective polymers undergo condensation to effect coupling. U.S. Patent No. 6,255,404 teaches a remedy to this Mooney viscosity increase by treating the modified polymers with an alkyl alkoxysilane (*e.g.*, octyl triethoxy silane) to thereby stabilize the hydrocarbyloxy silane end group. The alkyl alkoxysilane can be added in amounts from 1 to 20 mol per mole of initiator, although when present in amounts above the equivalence of alkoxysilane functionalities, decreases in polymer viscosity are observed due to the plasticizing effect of the alkyl alkoxysilane *(i.e.,* the excess alkyl alkoxysilane acts as an oil). WO 2018/125733 A1, WO 2015/089356 A2 and US 2014-0031471 disclose methods to prepare a stabilized polymerization mixture and desolventizing the mixture to provide a stabilized diene copolymer having terminal modification.

### SUMMARY OF THE INVENTION

The present invention provides a process for preparing a stabilized diene copolymer having terminal modification, the process comprising (i) combining an organolithium compound, butadiene monomer, and styrene monomer, optionally together with a vinyl modifier, in a solvent to form a polymerization mixture, where said step of combining an organolithium compound, butadiene monomer, and styrene monomer, includes employing from 0.05 to 50 mmol butyl lithium per 100 gram of total monomer; (ii) allowing the monomer to polymerize and thereby form a living polymer, where said living polymer is characterized by a base Mp, which is determined by GPC using polystyrene standards and polystyrene Mark Houwink constants, of from 160 to 280 kg per mole; (iii) after said step of allowing the monomer to polymerize, introducing an imine-containing hydrocarbyloxy silane compound to the polymerization mixture, where said imine-containing hydrocarbyloxy silane is added in an amount from 0.2 to 0.8 mol per mole of organolithium compound, to thereby form a polymerization mixture including a modified polymer; (iv) after said step of introducing an imine-containing hydrocarbyloxy silane, introducing a hydrocarbyl hydrocarbyloxy silane to the polymerization mixture including the modified polymer to thereby form a stabilized polymerization mixture, where said hydrocarbyl hydrocarbyloxy silane is added in an amount from 1 to 12 mol per mole of organolithium compound; (v) introducing a condensation accelerator to the polymerization mixture including thea modified polymer or to the stabilized polymerization mixture where the amount of condensation accelerator introduced is from 1.0 to 4.0 moles of condensation accelerator per mole of lithium; and (vi) desolventizing the polymer mixture to provide the stabilized diene copolymer having terminal modification, where the modified polymer within the stabilized polymerization mixture has a Mooney viscosity ($ML_{1+4}$@ 100 °C) of greater than 50.

## DETAILED DESCRIPTION OF ILLUSTRATIVE EMBODIMENTS

Embodiments of the invention are based, at least in part, on the discovery of a process for producing diene-based copolymers modified with an imine-containing hydrocarbyloxy silane compound and stabilized with a hydrocarbyl hydrocarbyloxy silane compound. While the prior art generally contemplates polymers of this nature, the present invention builds on a desire to achieve polymers having a relatively high initial viscosity *(i.e.,* at the time of polymer desolventization), which allows for efficient handling during manufacture of the polymer, and relatively low aged viscosity (i.e. without significant Mooney growth), which allows for efficient use of the polymer in the manufacture of rubber articles such as tires. In one or more embodiments, the diene-based copolymers produced according to this invention are modified copolymers of butadiene and styrene and have a Mooney viscosity ($ML_{1+4}$@ 100 °C) of greater than 50 prior to isolating the modified copolymers, and an aged Mooney viscosity ($ML_{1+4}$@ 100 °C) of less than 120. While the prior art contemplates diene-based copolymers terminated with an imine-containing trialkoxysilane, and the use of an alkyltrioxysilane to stabilize analogous polymers from excessive Mooney growth, the prior art does not appreciate all of the factors, as well as the interplay between these factors, that critically impact important polymer properties such as Mooney viscosity. In particular, it has unexpectedly been discovered that the viscosity (*i.e.,* Mooney viscosity) of the polymer, from initial synthesis through long-term aging, hinges on factors such as peak molecular weight, the amount of modifying agent, the amount of stabilizing agent, coupling efficiency, and amount of condensation catalyst. With these discoveries, copolymers having a relatively high Mooney viscosity at the time of polymer desolventization can be achieved while at the same time maintaining a relatively low aged Mooney viscosity.

## PROCESS OVERVIEW

In one or more embodiments, the process for forming polymer according to the present invention generally includes (i) a polymerization step to form a reactive polymer, (ii) a subsequent modification step to functionalize the reactive polymer (iii) a stabilization step to stabilize the functionalized polymer, and (iv) a polymer desolventization step to isolate the stabilized, functionalized polymer. In one or more embodiments, the process may further include a hydrolysis and/or condensation step. In these or other embodiments, the process may further include a polymer drying step to remove water from the polymer product.

## POLYMERIZATION

In one or more embodiments, the polymerization step includes anionically polymerizing conjugated diene monomer *(e.g.,* butadiene) and vinyl aromatic monomer *(e.g.,* styrene) in solution to provide a polymerization mixture including polymers having reactive polymer chain ends.

The preparation of polymer by employing anionic polymerization techniques is generally known. The key mechanistic features of anionic polymerization have been described in books *(e.g.,* Hsieh, H. L.; Quirk, R. P. Anionic Polymerization: Principles and Practical Applications; Marcel Dekker: New York, 1996) and review articles (*e.g.,* Hadjichristidis, N.; Pitsikalis, M.; Pispas, S.; Iatrou, H.; Chem. Rev. 2001, 101(12), 3747-3792). Anionic initiators may advantageously produce polymer having reactive chain ends *(e.g.,* living polymers) that, prior to quenching, are capable of reacting with additional monomers for further chain growth or reacting with certain functionalizing agents to give functionalized polymers. The polymers having reactive polymer chain ends may simply be referred to as reactive polymers. As those skilled in the art appreciate, these reactive polymers include a reactive chain end, which is believed to be ionic, at which a reaction between a functionalizing agent and the reactive chain end of the polymer can take place, which thereby imparts a functionality or functional group to the polymer chain end, or which may couple multiple polymers together.

The monomer that can be anionically polymerized to form these polymers include conjugated diene monomer, which may optionally be copolymerized with other monomers such as vinyl-substituted aromatic monomer. Examples of conjugated diene monomer include 1,3-butadiene, isoprene, 1,3-pentadiene, 1,3-hexadiene, 2,3-dimethyl-1,3-butadiene, 2-ethyl-1,3-butadiene, 2-methyl-1,3-pentadiene, 3-methyl-1,3-pentadiene, 4-methyl-1,3-pentadiene, and 2,4-hexadiene. Mixtures of two or more conjugated dienes may also be utilized in copolymerization. Examples of monomer copolymerizable with conjugated diene monomer include vinyl-substituted aromatic compounds such as styrene, p-methylstyrene, α-methylstyrene, and vinylnaphthalene.

The practice of this invention is not limited by the selection of any particular anionic initiators. Exemplary anionic initiators include organolithium compounds. In one or more embodiments, organolithium compounds may include heteroatoms. In these or other embodiments, organolithium compounds may include one or more heterocyclic groups. Types of organolithium compounds include alkyllithium compounds, aryllithium compounds, and cycloalkyllithium compounds. Specific examples of organolithium compounds include ethyllithium, n-propyllithium, isopropyllithium, n-butyllithium, *sec*-butyllithium, t-butyllithium, n-amyllithium, isoamyllithium, and phenyllithium. Still other anionic initiators

include organosodium compounds such as phenylsodium and 2,4,6-trimethylphenylsodium.

Anionic polymerization may be conducted in polar solvents, non-polar solvents, and mixtures thereof. In one or more embodiments, a solvent may be employed as a carrier to either dissolve or suspend the initiator in order to facilitate the delivery of the initiator to the polymerization system.

In one or more embodiments, suitable solvents include those organic compounds that will not undergo polymerization or incorporation into propagating polymer chains during the polymerization of monomer in the presence of catalyst. In one or more embodiments, these organic species are liquid at ambient temperature and pressure. In one or more embodiments, these organic solvents are inert to the catalyst. Exemplary organic solvents include hydrocarbons with a low or relatively low boiling point such as aromatic hydrocarbons, aliphatic hydrocarbons, and cycloaliphatic hydrocarbons. Non-limiting examples of aromatic hydrocarbons include benzene, toluene, xylenes, ethylbenzene, diethylbenzene, and mesitylene. Non-limiting examples of aliphatic hydrocarbons include *n*-pentane, *n*-hexane, *n*-heptane, *n*-octane, *n*-nonane, *n*-decane, isopentane, isohexanes, isopentanes, isooctanes, 2,2-dimethylbutane, petroleum ether, kerosene, and petroleum spirits. And, non-limiting examples of cycloaliphatic hydrocarbons include cyclopentane, cyclohexane, methylcyclopentane, and methylcyclohexane. Mixtures of the above hydrocarbons may also be used. The low-boiling hydrocarbon solvents are typically separated from the polymer upon completion of the polymerization. Other examples of organic solvents include high-boiling hydrocarbons of high molecular weights, such as paraffinic oil, aromatic oil, or other hydrocarbon oils that are commonly used to oil-extend polymers. Since these hydrocarbons are non-volatile, they typically do not require separation and remain incorporated in the polymer.

Anionic polymerization may be conducted in the presence of a randomizer (which may also be referred to as a polar coordinator) or a vinyl modifier. As those skilled in the art appreciate, these compounds, which may serve a dual role, can assist in randomizing comonomer throughout the polymer chain and/or modify the vinyl content of the mer units deriving from dienes. Compounds useful as randomizers include those having an oxygen or nitrogen heteroatom and a non-bonded pair of electrons. Examples include linear and cyclic oligomeric oxolanyl alkanes; dialkyl ethers of mono and oligo alkylene glycols (also known as glyme ethers); "crown" ethers; tertiary amines; linear THF oligomers; and the like. Linear and cyclic oligomeric oxolanyl alkanes are described in U.S. Pat. No. 4,429,091 and 9,868,795, which is incorporated herein by reference. Specific examples of compounds useful as randomizers include 2,2-bis(2'-tetrahydrofuryl)propane, 1,2-dimethoxyethane, *N,N,N',N'*-tetramethylethylenediamine (TMEDA), tetrahydrofuran (THF), 1,2-dipiperidylethane, dipiperidylmethane, hexamethylphosphoramide, *N-N'*-dimethylpiperazine, diazabicyclooctane, dimethyl ether, diethyl ether, tri-n-butylamine , and mixtures thereof. In other embodiments, potassium alkoxides can be used to randomize the styrene distribution.

The amount of randomizer to be employed may depend on various factors such as the desired microstructure of the polymer, the ratio of monomer to comonomer, the polymerization temperature, as well as the nature of the specific randomizer employed. In one or more embodiments, the amount of randomizer employed may range between 0.01 and 100 moles per mole of the anionic initiator.

The anionic initiator and the randomizer can be introduced to the polymerization system by various methods. In one or more embodiments, the anionic initiator and the randomizer may be added separately to the monomer to be polymerized in either a stepwise or simultaneous manner.

As indicated above, polymerization of conjugated diene monomer, together with monomer copolymerizable with the conjugated diene monomer, in the presence of an effective amount of initiator, produces a reactive polymer. The introduction of the initiator, the conjugated diene monomer, the comonomer, and the solvent forms a polymerization mixture in which the reactive polymer is formed. Polymerization within a solvent produces a polymerization mixture in which the polymer product is dissolved or suspended in the solvent. This polymerization mixture may be referred to as a polymer cement.

The amount of the initiator to be employed may depend on the interplay of various factors such as the type of initiator employed, the purity of the ingredients, the polymerization temperature, the polymerization rate and conversion desired, the molecular weight desired, and many other factors. In one or more embodiments, the amount of initiator employed may be expressed as the mmols of initiator per weight of monomer. In one or more embodiments, the initiator loading may be varied from 0.05 to 50 mmol, in other embodiments from about 0.1 to about 25 mmol, in still other embodiments from about 0.2 to about 2.5 mmol, and in other embodiments from about 0.4 to about 0.7 mmol of initiator per 100 gram of monomer.

In one or more embodiments, the polymerization may be conducted in any conventional polymerization vessel known in the art. For example, the polymerization can be conducted in a conventional stirred-tank reactor. In one or more embodiments, all of the ingredients used for the polymerization can be combined within a single vessel (*e.g.*, a conventional stirred-tank reactor), and all steps of the polymerization process can be conducted within this vessel. In other embodiments, two or more of the ingredients can be pre-combined in one vessel and then transferred to another vessel where the polymerization of monomer (or at least a major portion thereof) may be conducted. Because various embodiments of the present invention include the use of multiple reactors or reaction zones, the vessel *(e.g.,* tank reactor) in which the polymerization is conducted may be referred to as a first vessel or first reaction zone.

The polymerization can be carried out as a batch process, a continuous process, or a semi-continuous process. In the semi-continuous process, the monomer is intermittently charged as needed to replace that monomer already polymerized. In one or more embodiments, the conditions under which the polymerization proceeds may be controlled to maintain the temperature of the polymerization mixture within a range from about -10°C to about 200 °C, in other embodiments from about 0 °C to about 150 °C, and in other embodiments from about 20 °C to about 110 °C. In one or more embodiments, the heat of polymerization may be removed by external cooling by a thermally controlled reactor jacket, internal cooling by evaporation and condensation of the monomer through the use of a reflux condenser connected to the reactor, or a combination of the two methods. Also, conditions may be controlled to conduct the polymerization under a pressure of from about 0.1 atmosphere to 50 atmospheres, in other embodiments from about 0.5 atmosphere to about 20 atmosphere, and in other embodiments from about 1 atmosphere to about 10 atmospheres. In one or more embodiments, the pressures at which the polymerization may be carried out include those that ensure that the majority of the monomer is in the liquid phase. In these or other embodiments, the polymerization mixture may be maintained under anaerobic conditions.

## POLYMER CHARACTERISTICS PRIOR TO MODIFICATION

As explained above, in particular embodiments of the invention, the reactive polymers produced are copolymers of styrene and butadiene. In one or more embodiments, the copolymers are random and optionally include microblocks of styrene or butadiene (i.e. repeat units of styrene or butadiene of 3 to 10 units). In one or more embodiments, the copolymers are devoid or substantially devoid of chemical blocks of styrene or butadiene (i.e. repeat units of styrene or butadiene greater than 10 units). In one or more embodiments, the reactive copolymers may be characterized by styrene content, which is the weight percentage of the styrene mer units relative to the total weight of the reactive copolymers prior to modification. As the skilled person appreciates, this can be determined from the weight of charged styrene monomer relative to the total weight of charged monomer (i.e. total weight of charged butadiene and styrene). In one or more embodiments, the reactive polymers, prior to modification, include greater than 5, in other embodiments greater than 7, and in other embodiments greater than 9 weight percent styrene. In these or other embodiments, the reactive polymers include less than 45, in other embodiments less than 30, in other embodiments less than 16, in other embodiments less than 14, and in other embodiments less than 12 weight percent styrene. In one or more embodiments, the polymers include from about 5 to about 45, in other embodiments from about 7 to about 14, and in other embodiments from about 9 to about 12 weight percent styrene.

In one or more embodiments, the reactive polymers produced according to aspects of the present invention may be characterized by vinyl content, which may be described as the number of unsaturations in the 1,2 microstructure relative to the total unsaturations within the polymer chain. As the skilled person will appreciate, vinyl content can be determined by FTIR analysis. In one or more embodiments, the reactive polymers include greater than 10%, in other embodiments greater than 20%, and in other embodiments greater than 35% vinyl. In these or other embodiments, the reactive polymers include less than 80%, in other embodiments less than 60%, and in other embodiments less than 46%. In one or more embodiments, the reactive polymers include from about 10 to about 80%, in other embodiments from about 20 to about 60%, and in other embodiments from about 35 to about 46% vinyl.

In one or more embodiments, the reactive polymers may be characterized by a peak molecular weight (Mp). As those skilled in the art will appreciate, Mp can be determined by using gel permeation chromatography (GPC) using appropriate calibration standards. For purposes of this specification, GPC measurements employ polystyrene standards and polystyrene Mark Houwink constants unless otherwise specified. In one or more embodiments, the reactive polymers have an Mp, which may also be referred to as the base Mp, of greater than 160 kg/mol, in other embodiments greater than 170 kg/mol, and in other embodiments greater than 180 kg/mol. In these or other embodiments, the reactive polymers have an Mp of less 280 kg/mol, in other embodiments less than 260 kg/mol, and in other embodiments less than 250 kg/mol. In one or more embodiments, the reactive polymers have an Mp of from 160 to 280 kg/mol, in other embodiments from about 170 to about 260 kg/mol, and in other embodiments from about 180 to about 250 kg/mol.

In one or more embodiments, at least about 30% of the polymer molecules contain a living end, in other embodiments at least about 50% of the polymer molecules contain a living end, and in other embodiments at least about 80% contain a living end.

## POLYMER MODIFICATION

As indicated above, following polymerization, the reactive polymer undergoes modification. That is, the reactive end of the polymer is modified, which may also be referred to as functionalized, by introducing an imine-containing hydrocarbyloxy silane compound to the polymerization mixture. It is believed that the polymer chain end reacts with the imine-containing hydrocarbyloxy silane (which for purposes of this specification may be referred to as a functionalizing or modifying agent) to provide a residue of the functionalizing agent at the end of the polymer chain. Accordingly, the reaction

between the polymer and the functionalizing agent produces a polymer composition including one or more polymer chains that include a terminal group deriving from the imine-containing hydrocarbyloxy silane. In one or more embodiments, greater than 10 mol %, in other embodiments greater than 30 mol %, and in other embodiments greater than 35 mol % of the polymer chains within the polymer composition include the terminal functional group. In these or other embodiments, less than 80 mol %, in other embodiments less than 70 mol %, and in other embodiments less than 65 mol % of the polymer chains within the polymer composition include the terminal functional group. In one or more embodiments, from about 10 to about 80 mol %, in other embodiments from about 30 to about 70 mol %, and in other embodiments from about 35 to about 65 mol % of the polymer chains within the polymer composition include the terminal functional group. These polymers may be referred to as functionalized or modified polymers. It should be appreciated that the reaction between the functionalizing agent and the reactive polymer can also result in polymer coupling. In either event, polymers bearing a chain-end functional group and polymers coupled with the residue of the functionalizing agent will both be referred to as modified or functionalized polymers unless otherwise designated.

In one or more embodiments, the imine-containing hydrocarbyloxy silane may include *N*-(1,3-dimethylbutylidene)-3-(triethoxysilyl)-1-propaneamine, *N*-(1-methylethylidene)-3-(triethoxysilyl)-1-propaneamine, *N*-ethylidene-3-(triethoxysilyl)-1-propaneamine, *N*-(1-methylpropylidene)-3-(triethoxysilyl)-1-propaneamine, or *N*-(4-N,N-dimethylaminobenzylidene)-3-(triethoxysilyl)-1-propaneamine. In particular embodiments, the imine-containing hydrocarbyloxy silane is *N*-(1-methylpropylidene)-3-(triethoxysilyl)-1-propaneamine, or *N*-(1,3-dimethylbutylidene)-3-(triethoxysilyl)-1-propaneamine.

The amount of functionalizing agent *(i.e.,* imine-containing hydrocarbyloxy silane) employed in the practice of the present invention can be described with respect to the lithium or metal cation associated with the initiator. In one or more embodiments, the amount of functionalizing agent introduced to the polymerization mixture is greater than 0.2, in other embodiments greater than 0.3, and in other embodiments greater than 0.4 moles of functionalizing agent per mole of lithium in the initiator. In these or other embodiments, less than 0.8, in other embodiments less than 0.7, and in other embodiments less than 0.65 moles of functionalizing agent per mole of lithium is introduced to the polymerization mixture. In one or more embodiments, from 0.2 to 0.8, in other embodiments from about 0.3 to about 0.7, and in other embodiments from about 0.4 to about 0.65 moles of functionalizing agent per mole of lithium is introduced to the polymerization mixture.

In one or more embodiments, the functionalizing agent is introduced to the polymer cement while the polymer is dissolved or suspended within a solvent. As those skilled in the art appreciate, this solution may be referred to as a polymer cement. In one or more embodiments, the characteristics of the polymer cement, such as its concentration, will be the same or similar to the characteristics of the cement prior to functionalization. In other embodiments, the stabilizing agent may be introduced to the polymer while the polymer is suspended or dissolved within monomer.

In one or more embodiments, modification of the polymer (*i.e.*, introduction of the functionalizing agent to the polymer cement), takes place within the same vessel in which the polymerization was conducted. In other embodiments, modification of the polymer takes place outside of the reaction vessel in which the polymerization takes place. For example, a functionalizing agent can be introduced to the polymerization mixture (*i.e.*, polymer cement) in a downstream vessel or a downstream transfer conduit.

In one or more embodiments, the reaction between the functionalizing agent and the reactive polymer may take place at a temperature from about 10 °C to about 150 °C, and in other embodiments from about 20 °C to about 110 °C. The time required for completing the reaction between the functionalizing agent and the reactive polymer depends on various factors such as the type and amount of the catalyst or initiator used to prepare the reactive polymer, the type and amount of the functionalizing agent, as well as the temperature at which the functionalization reaction is conducted. In one or more embodiments, the reaction between the functionalizing agent and the reactive polymer can be conducted for about 30 seconds to about 90 minutes, or in other embodiments 10 to 60 minutes.

## POLYMER STABILIZATION

As indicated above, following modification, the modified polymer is stabilized. That is, the modified polymer is stabilized by introducing an alkyl hydrocarbyloxy silane to the polymerization mixture including the modified polymer. It is believed that the alkyl hydrocarbyloxy silane reacts with the terminal functional group. It also believed that the reaction between the chain end functional group and the alkyl hydorcarbyloxy silane takes place at the introduction of the two molecules or after aging of the composition. The reaction between the alkyl hydrocarbyloxy silane and the terminal group produces a polymer composition including one or more polymer chains that include a terminal group deriving from the imine-containing hydrocarbyloxy silane and subsequent reaction with an alkyl hydrocarbyloxy silane.

In one or more embodiments, the stabilizing agent is a hydrocarbyl hydrocarbyloxy silane that may be defined by the formula I:

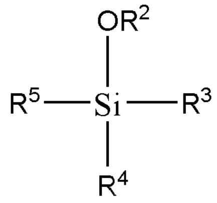

where $R^2$ is a hydrocarbyl group, $R^3$, $R^4$, and $R^5$ are each independently a hydrocarbyl group or a hydrocarbyloxy group. In particular embodiments, $R^3$, $R^4$, and $R^5$ are hydrocarbyl groups. In other embodiments, $R^3$ and $R^4$ are hydrocarbyl groups and $R^5$ is a hydrocarbyloxy group. In other embodiments, $R^3$ is a hydrocarbyl group and $R^4$ and $R^5$ are hydrocarbyloxy groups. In certain embodiments, $R^3$, $R^4$, and $R^5$ are all hydrocarbyloxy groups.

In one or more embodiments, the hydrocarbyl groups of the hydrocarbyl hydrocarbyloxy silane include, but are not limited to, alkyl, cycloalkyl, substituted cycloalkyl, alkenyl, cycloalkenyl, substituted cycloalkenyl, aryl, allyl, substituted aryl, aralkyl, alkaryl, or alkynyl groups. Substituted hydrocarbyl groups include hydrocarbyl groups in which one or more hydrogen atoms have been replaced by a substituent such as an alkyl group. In one or more embodiments, the hydrocarbyl groups may include from one, or the appropriate minimum number of carbon atoms to form the group, to 20 carbon atoms. These hydrocarbyl groups may contain heteroatoms such as, but not limited to, nitrogen, boron, oxygen, silicon, sulfur, and phosphorus atoms.

In one or more embodiments, the hydrocarbyloxy groups of the hydrocarbyl hydrocarbyloxy silane include, but are not limited to, alkoxy, cycloalkoxy, substituted cycloalkoxy, alkenyloxy, cycloalkenyloxy, substituted cycloalkenyloxy, aryloxy, allyloxy, substituted aryloxy, aralkyloxy, alkaryloxy, or alkynyloxy groups. Substituted hydrocarbyloxy groups include hydrocarbyloxy groups in which one or more hydrogen atoms attached to a carbon atom have been replaced by a substituent such as an alkyl group. In one or more embodiments, the hydrocarbyloxy groups may include from one, or the appropriate minimum number of carbon atoms to form the group, to 20 carbon atoms. The hydrocarbyloxy groups may contain heteroatoms such as, but not limited to nitrogen, boron, oxygen, silicon, sulfur, and phosphorus atoms.

In one or more embodiments, types of hydrocarbyl hydrocarbyloxy silane include trihydrocarbyl hydrocarbyloxy silanes, dihydrocarbyl dihydrocarbyloxy silanes, hydrocarbyl trihydrocarbyloxy silanes, and tetrahydrocarbyloxy silanes.

Specific examples of hydrocarbyl trihydrocarbyloxy silanes include methyltrimethoxysilane, ethyltrimethoxysilane, propyltrimethoxysilane, phenyltrimethoxysilane, octyltrimethoxysilane, decyltrimethoxysilane, methyltriethoxysilane, ethyltriethoxysilane, propyltriethoxysilane, phenyltriethoxysilane, octyltriethoxysilane, decyltriethoxysilane, methyltriphenoxysilane, ethyltriphenoxysilane, propyltriphenoxysilane, octyltriphenoxysilane, phenyltriphenoxysilane, decyltriphenoxysilane, methyldiethoxymethoxysilane, ethyldiethoxymethoxysilane, propyldiethoxymethoxysilane, phenyldiethoxymethoxysilane, octyldiethoxymethoxysilane, decyldiethoxymethoxysilane, methyldiphenoxymethoxysilane, ethyldiphenoxymethoxysilane, propyldiphenoxymethoxysilane, phenyldiphenoxymethoxysilane, octyldiphenoxymethoxysilane, decyldiphenoxymethoxysilane, methyldimethoxyethoxysilane, ethyldimethoxyethoxysilane, propyldimethoxyethoxysilane, phenyldimethoxyethoxysilane, octyldimethoxyethoxysilane, decyldimethoxyethoxysilane, methyldiphenoxyethoxysilane, ethyldiphenoxyethoxysilane, propyldiphenoxyethoxysilane, phenyldiphenoxyethoxysilane, octyldiphenoxyethoxysilane, decyldiphenoxyethoxysilane, methyldimethoxyphenoxysilane, ethyldimethoxyphenoxysilane, propyldimethoxyphenoxysilane, phenyldimethoxyphenoxysilane, octyldimethoxyphenoxysilane, decyldimethoxyphenoxysilane, methyldiethoxyphenoxysilane, ethyldiethoxyphenoxysilane, propyldiethoxyphenoxysilane, phenyldiethoxyphenoxysilane, octyldiethoxyphenoxysilane, decyldiethoxyphenoxysilane, methylmethoxyethoxyphenoxysilane, ethylmethoxyethoxyphenoxysilane, propylmethoxyethoxyphenoxysilane, phenylmethoxyethoxyphenoxysilane, octylmethoxyethoxyphenoxysilane, and decylmethoxyethoxyphenoxysilane.

In one or more embodiments, the stabilizing agent is added to the polymer cement after a sufficient time is provided to allow completion of the reaction between the reactive polymer and the functionalizing agent. In one or more embodiments, the stabilizing agent is introduced to the polymer cement after 30 minutes, in other embodiments after 15 minutes, and in other embodiments after 10 minutes from the time that the functionalizing agent is introduced to the polymer cement.

The amount of stabilizing agent *(i.e.,* hydrocarbyl hydrocarbyloxy silane) employed in the practice of the present invention can be described with respect to the moles of lithium associated with the initiator. In one or more embodiments, greater than 1, in other embodiments greater than 2, in other embodiments greater than 3, and in other embodiments greater than 4 moles of functionalizing agent per mole of lithium in the initiator is introduced to the polymerization mixture. In these or other embodiments, less than 12, in other embodiments less than 11, in other embodiments less than 10, in other embodiments less than 9, and in other embodiments less than 8 moles of functionalizing agent per mole of lithium is introduced to the polymerization mixture. In one or more embodiments, from about 1 to about 12, in other embodiments from about 3 to about 10, and in other embodiments from about 4 to about 8 moles of functionalizing agent per mole of lithium is introduced to the polymerization mixture.

In one or more embodiments, the stabilization of the polymer (*i.e.*, introduction of the stabilizing agent) takes place within the same vessel in which the polymerization took place. In these embodiments, this will include the same vessel in which the modification took place. In other embodiments, stabilization of the polymer (*i.e.*, introduction of the stabilizing agent) takes place outside of the vessel in which the polymerization took place. Likewise, in one or more embodiments, stabilization of the polymer takes place outside of the vessel in which the modification of the polymer took place. For example, in one or more embodiments, the stabilizing agent can be added to the polymerization mixture *(i.e.,* polymer cement) in a vessel or transfer line that is downstream of the vessel in which the polymerization took place and that is downstream of the vessel in which the polymer modification took place. For purposes of this specification, relative to the polymerization vessel, the vessel or conduit in which the stabilizing agent is introduced may be referred to as a second vessel or second reaction zone.

**CONDENSATION ACCELERATOR**

In one or more embodiments, after the introduction of the functionalizing agent to the reactive polymer, optionally after the addition of a quenching agent and/or antioxidant, optionally after or together with the stabilizing agent, and optionally after recovery or isolation of the functionalized polymer, a condensation accelerator can be added to the polymerization mixture. Useful condensation accelerators include tin and/or titanium carboxylates and tin and/or titanium alkoxides. One specific example is titanium 2-ethylhexyl oxide. Useful condensation catalysts and their use are disclosed in U.S. Publication No. 2005/0159554 (Patent No. US 7,683,151), which is incorporated herein by reference. In other embodiments, an organic acid can be used as a condensation accelerator. Useful types of organic acids include aliphatic, cycloaliphatic and aromatic monocarboxylic, dicarboxylic, tricarboxylic and tetracarboxylic acids. Specific examples of useful organic acids include, but are not limited to, acetic acid, propionic acid, butyric acid, hexanoic acid, 2-methylhexanoic acid, 2-ethylhexanoic acid, cyclohexanoic acid and benzoic acid.

The amount of condensation accelerator employed in the practice of the present invention can be described with respect to the moles of lithium associated with the initiator. In one or more embodiments, the moles of condensation accelerator per mole of lithium is greater than 1.0, in other embodiments greater than 1.5, and in other embodiments greater than 1.8 moles of condensation accelerator per mole of lithium in the initiator. In these or other embodiments, less than 4.0, in other embodiments less than 3.3, and in other embodiments less than 3.0 moles of condensation accelerator per mole of lithium is introduced to the polymerization mixture. In one or more embodiments, from 1.0 to 4.0, in other embodiments from about 1.5 to about 3.3, and in other embodiments from about 1.8 to about 3.0 moles of condensation accelerator per mole of lithium is introduced to the polymerization mixture.

**ANTIOXIDANT**

In one or more embodiments, after the introduction of the functionalizing agent to the reactive polymer, optionally after the addition of a quenching agent and/or antioxidant, optionally after or together with the stabilizing agent, and optionally after recovery or isolation of the functionalized polymer, an antioxidant can be added to the polymerization mixture. Exemplary antioxidants include 2,6-di-*tert*-butyl-4-methylphenol.

In one or more embodiments, after formation of the polymer, a processing aid and other optional additives such as oil can be added to the polymer cement.

**OPTIONAL QUENCHING**

In one or more embodiments, after the reaction between the reactive polymer and the functionalizing agent has been accomplished or completed, a quenching agent can be added to the polymerization mixture in order to inactivate any residual reactive polymer chains and the catalyst or catalyst components. The quenching agent may include a protic compound, which includes, but is not limited to, an alcohol, a carboxylic acid, an inorganic acid, water, or a mixture thereof. The amount of quenching agent employed may be in the range of 0.5 to 10 moles of quenching agent per mole of lithium used to initiate the polymerization.

**POLYMER PROPERTIES AT DESOLVENTIZATION**

As indicated above, the polymers of the present invention are, at the step of desolventization as explained herein below, are characterized by a Mooney viscosity ($ML_{1+4}$@ 100 °C) of greater than 50, in other embodiments greater than 52, and in other embodiments greater than 55. In one or more embodiments, the polymers of the present invention are, at the step of desolventization, characterized by a Mooney viscosity ($ML_{1+4}$@ 100 °C) of from greater than 50 to about 105, in other embodiments from about 52 to about 80, and in other embodiments from about 55 to about 70. For purposes of this specification, and unless otherwise stated, Mooney viscosity ($ML_{1+4}$@ 100 °C) is determined according to ASTMD

1648-17.

Additionally, in one or more embodiments, the polymers of the present invention are, at the step of desolventization, characterized by a percent coupling of greater than 20, in other embodiments greater than 30, and in other embodiments greater than 40 percent. In these or other embodiments, the polymers of the present invention, the polymers of the present invention are, at the step of desolventization, characterized by a percent coupling of less than 80, in other embodiments less than 70, and in other embodiments less than 65 percent. In one or more embodiments, the polymers of the present invention are, at the step of desolventization, characterized by a percent coupling of from about 20 to about 80, in other embodiments from about 30 to about 70, and in other embodiments from about 40 to about 65 percent. As the skilled person will appreciate, percent coupling can be determined by GPC. For purposes of this specification, coupling refers to the area percent of the GPC curve having peaks greater than or equal to twice the base peak (*i.e.,* percent couple equals B/(A+B) • 100%, where A is the area of the base peak and B is the total area of all peaks greater or equal to two times the base peak *(i.e., A)).*

In one or more embodiments, the method of the present invention includes selecting, from the ranges disclosed herein, (i) a peak molecular weight of the base polymer, (ii) a desired loading of functionalizing agent, and (iii) an appropriate loading of stabilizing agent, and (iv) an appropriate loading of condensation catalyst to meet the targeted Mooney viscosities *(e.g.,* greater than 50) at desolventization within the confines of the following formula:

Mooney Viscosity at Desolventization = 44.7 + [0.5218 Base Mp] - [5.1 Functionalizing Agent Equivalents] - [4.765 Stabilizing Agent Equivalents] + [8.86 Condensation Accelerator Equivalents]

where Mooney Viscosity at Desolventization is the $ML_{1+4}$@ 100 °C at the time of desolventization, Base Mp represents the peak molecular weight for the base polymer in kg/mol as determined by GPC using polystyrene standards and polystyrene Mark Houwink constants, Functionalizing Agent Equivalents is the moles of functionalizing agent per mole of lithium used to initiate polymerization of the polymer, Stabilizing Agent Equivalents is the moles of stabilizing agent per mole of lithium used to stabilize the polymer, and Condensation Accelerator Equivalents is the moles of condensation catalyst per mole of lithium used to promote condensation.

In one or more embodiments, the above formula is satisfied for Mooney viscosity at desolventization where Mooney viscosity is 50 or more (or other ranges disclosed herein), Mp is about 160 to about 180 kg/mol, Functionalizing Agent Equivalents is 0.2 to 0.8 mole of functionalizing agent per mole of lithium, Stabilizing Agent Equivalents is 1 to 12 mole of stabilizing agent per mole of lithium, and Condensation Accelerator Equivalents is about 1 to about 4 mole per mole of lithium. As the skilled person will appreciate, the foregoing formula can be satisfied for other ranges disclosed herein (*e.g.,* other ranges for the Functionalizing Agent Equivalents).

POLYMER DESOLVENTIZATION

As indicated above, following stabilization and optionally following introduction of a condensation accelerator and/or an antioxidant, the polymer product *(i.e.,* the stabilized, functionalize polymer) undergoes desolventization. In other words, as described above, the polymers are synthesized in an organic solvent, and during the step of desolventization, the organic solvent is separated from the polymer.

In particular embodiments, desolventization includes hot water and/or steam coagulation. For example, the polymerization mixture, which includes the stabilized, modified polymer, can be combined with a steam or hot water stream. The heat associated with the steam or hot water stream volatilizes the solvent and any unreacted monomer. The polymer product is then dispersed within an aqueous phase in, for example, the form of polymer crumb. The nature and size of the polymer crumb can generally be manipulated by the introduction of mechanical energy in the form of mixers.

In one or more embodiments, the polymer crumb is temporarily stored as a crumb dispersion within the water until subsequent drying steps, which are described below. The crumb dispersion is generally a mixture of polymer particles or crumb and water. The polymer particles, which may also be referred to as coagulated polymer, are generally on the macroscale and have at least on dimension that is greater than one mm. This crumb dispersion may be contained within a tank, such as a conventional reactor tank such as a continuously stirred tank reactor.

In one or more embodiments, the polymer crumb can be further processed to remove residual solvent and dry the polymer (*i.e.,* separate the polymer from the water). In practicing the present invention, the polymer can be dried by using conventional techniques, which may include one or more of filtering, pressing, and heating. Following desolventization and drying, the volatile content of the dried polymer can be below 2.0 %, in other embodiments below 1.0 %, and in other embodiments below 0.5 % by weight of the polymer.

In other embodiments, the polymer product can be desolventized by employing devolatilizers, which are extruder-type devices that can operate in conjunction with heat and/or vacuum. In yet other embodiments, the polymerization mixture can be directly drum dried.

Regardless of the methods used to desolventize and dry the polymer, the finished polymer product may be

referred to as a dried polymer. Using conventional techniques, the dried polymer can be molded or otherwise manipulated into a bale.

## POLYMER CHARACTERISTICS OF DRIED POLYMER

In one or more embodiments, the dried, unaged polymers of the present invention are characterized by an advantageous Mooney viscosity ($ML_{1+4}$@ 100 °C). Specifically, in one or more embodiments, the polymers, within 24 hours of desolventization and drying, have a Mooney viscosity ($ML_{1+4}$@ 100 °C) of less than 95, in other embodiments less than 90, and in other embodiments less than 85. In these or other embodiments, the polymers, within 24 hours of desolventization and drying, have a Mooney viscosity ($ML_{1+4}$@ 100 °C) of from about 35 to about 120, in other embodiments from about 55 to about 95, in other embodiments from about 60 to about 90, and in other embodiments from about 65 to about 85. For purposes of this specification, the dried, unaged Mooney viscosity ($ML_{1+4}$@ 100 °C) may be referred to as the Mooney viscosity of the bale.

## POLYMER CHARACTERISTICS OF AGED POLYMER

As indicated above, the polymers of the present invention are characterized by an advantageous aged Mooney viscosity ($ML_{1+4}$@ 100 °C). Specifically, in one or more embodiments, the polymers, when aged for two years after desolventization and drying, have a Mooney viscosity ($ML_{1+4}$@ 100 °C) of less than 120, in other embodiments less than 105, and in other embodiments less than 95. In one or more embodiments, polymers, when aged for two years after desolventization and drying, have a Mooney viscosity ($ML_{1+4}$@ 100 °C) of from about 70 to about 120, in other embodiments from about 80 to about 105, and in other embodiments from about 85 to about 95. For purposes of this specification, and specifically with regard to the two-year aged Mooney viscosity, accelerated aging can be undertaken at 100 °C for two days in lieu of two years of room temperature aging. In other words, for purposes of this specification, the two aging methods are treated equivalently relative to the viscosity obtained.

In one or more embodiments, the method of the present invention includes selecting, from the ranges disclosed herein, (i) a peak molecular weight of the base polymer, (ii) a desired loading of functionalizing agent, and (iii) an appropriate loading of stabilizing agent to meet the targeted aged Mooney viscosities (e.g. less than 120) within the confines of the following formula:

Mooney After Aging = -34.2 + [0.828 Mooney Viscosity of Bale] + [0.348 Base Mp] - [0.425 % Coupling] + [98.9 Functionalizing Agent Equivalents] - [6.16 Stabilizing Agent Equivalents]

where Mooney After Aging is the $ML_{1+4}$@ 100 °C after heat aging for 48 hours at 100 °C, Mooney Viscosity of Bale is the $ML_{1+4}$@ 100 °C within 24 hours of desolventization and drying, Base Mp represents the peak molecular weight for the base polymer in kg/mol as determined by GPC using polystyrene standards and polystyrene Mark Houwink constants, % Coupling is the percentage of coupled polymers at desolventization as determined by GPC, the Functionalizing Agent Equivalents is the moles of functionalizing agent per mole of lithium used to initiate polymerization of the polymer, and Stabilizing Agent Equivalents is the moles of stabilizing agent per mole of lithium used to stabilize the polymer.

In one or more embodiments, the above formula is satisfied for Mooney After Aging where the Mooney viscosity is 120 or less (or other ranges disclosed herein), Mooney viscosity of Bale is from about 35 to about 120, Mp is 160 to about 180 kg/mol, % Coupling is from about 20% to about 80%, Functionalizing Agent Equivalents is 0.2 to 0.8 mole of functionalizing agent per mole of lithium, and Stabilizing Agent Equivalents is 1 to 12 mole of stabilizing agent per mole of lithium. As the skilled person will appreciate, the foregoing formula can be satisfied for other ranges disclosed herein (e.g. other ranges for the Functionalizing Agent Equivalents).

## INDUSTRIAL APPLICABILITY

The polymers of this invention are particularly useful in preparing rubber compositions that can be used to manufacture tire components. Rubber compounding techniques and the additives employed therein are generally disclosed in The Compounding and Vulcanization of Rubber, in Rubber Technology (2nd Ed. 1973).

The rubber compositions can be prepared by using the polymers of this invention alone or together with other elastomers *(i.e.,* polymers that can be vulcanized to form compositions possessing rubbery or elastomeric properties). Other elastomers that may be used include natural and synthetic rubbers. The synthetic rubbers typically derive from the polymerization of conjugated diene monomers, the copolymerization of conjugated diene monomers with other monomers such as vinyl-substituted aromatic monomers, or the copolymerization of ethylene with one or more $\alpha$-olefins and optionally one or more diene monomers.

Exemplary elastomers include natural rubber, synthetic polyisoprene, polybutadiene, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), polysulfide rubber, acrylic rubber, urethane rubber, silicone rubber, epichlorohydrin rubber, and mixtures thereof. These elastomers can have a myriad of macromolecular structures including linear, branched, and star-shaped structures.

The rubber compositions may include fillers such as inorganic and organic fillers. Examples of organic fillers include carbon black and starch. Examples of inorganic fillers include silica, aluminum hydroxide, magnesium hydroxide, mica, talc (hydrated magnesium silicate), and clays (hydrated aluminum silicates). Carbon blacks and silicas are the most common fillers used in manufacturing tires. In certain embodiments, a mixture of different fillers may be advantageously employed.

In one or more embodiments, carbon blacks include furnace blacks, channel blacks, and lamp blacks. More specific examples of carbon blacks include super abrasion furnace blacks, intermediate super abrasion furnace blacks, high abrasion furnace blacks, fast extrusion furnace blacks, fine furnace blacks, semi-reinforcing furnace blacks, medium processing channel blacks, hard processing channel blacks, conducting channel blacks, and acetylene blacks.

In particular embodiments, the carbon blacks may have a surface area (EMSA) of at least 20 $m^2/g$ and in other embodiments at least 35 $m^2/g$; surface area values can be determined by ASTM D-1765 using the cetyltrimethylammonium bromide (CTAB) technique. The carbon blacks may be in a pelletized form or an unpelletized flocculent form. The preferred form of carbon black may depend upon the type of mixing equipment used to mix the rubber compound.

The amount of carbon black employed in the rubber compositions can be up to about 50 parts by weight per 100 parts by weight of rubber (phr), with about 5 to about 40 phr being typical.

Some commercially available silicas which may be used include Hi-Sil™ 215, Hi-Sil™ 233, and Hi-Sil™ 190 (PPG Industries, Inc.; Pittsburgh, Pa.). Other suppliers of commercially available silica include Grace Davison (Baltimore, Md.), Degussa Corp. (Parsippany, N.J.), Rhodia Silica Systems (Cranbury, N.J.), and J.M. Huber Corp. (Edison, N.J.).

In one or more embodiments, silicas may be characterized by their surface areas, which give a measure of their reinforcing character. The Brunauer, Emmet and Teller ("BET") method (described in J. Am. Chem. Soc., 1939, vol. 60, 2 p. 309-319) is a recognized method for determining the surface area. The BET surface area of silica is generally less than 450 $m^2/g$. Useful ranges of surface area include from about 32 to about 400 $m^2/g$, about 100 to about 250 $m^2/g$, and about 150 to about 220 $m^2/g$.

The pH's of the silicas are generally from about 5 to about 7 or slightly over 7, or in other embodiments from about 5.5 to about 6.8.

In one or more embodiments, where silica is employed as a filler (alone or in combination with other fillers), a coupling agent and/or a shielding agent may be added to the rubber compositions during mixing in order to enhance the interaction of silica with the elastomers. Useful coupling agents and shielding agents are disclosed in U.S. Patent Nos. 3,842,111; 3,873,489; 3,978,103; 3,997,581; 4,002,594; 5,580,919; 5,583,245; 5,663,396; 5,674,932; 5,684,171; 5,684,172; 5,696,197; 6,608,145; 6,667,362; 6,579,949; 6,590,017; 6,525,118; 6,342,552; and 6,683,135; which are incorporated herein by reference.

The amount of silica employed in the rubber compositions can be from about 1 to about 100 phr or in other embodiments from about 5 to about 80 phr. The useful upper range is limited by the high viscosity imparted by silicas. When silica is used together with carbon black, the amount of silica can be decreased to as low as about 1 phr; as the amount of silica is decreased, lesser amounts of coupling agents and shielding agents can be employed. Generally, the amounts of coupling agents and shielding agents range from about 4% to about 20% based on the weight of silica used.

A multitude of rubber curing agents (also called vulcanizing agents) may be employed, including sulfur or peroxide-based curing systems. Curing agents are described in Kirk-Othmer, ENCYCLOPEDIA OF CHEMICAL TECHNOLOGY, Vol. 20, pgs. 365-468, (3rd Ed. 1982), particularly Vulcanization Agents and Auxiliary Materials, pgs. 390-402, and A.Y. Coran, Vulcanization, ENCYCLOPEDIA OF POLYMER SCIENCE AND ENGINEERING, (2nd Ed. 1989), which are incorporated herein by reference. Vulcanizing agents may be used alone or in combination.

Other ingredients that are typically employed in rubber compounding may also be added to the rubber compositions. These include accelerators, accelerator activators, oils, plasticizer, waxes, scorch inhibiting agents, processing aids, zinc oxide, tackifying resins, reinforcing resins, fatty acids such as stearic acid, peptizers, and antidegradants such as antioxidants and antiozonants. In particular embodiments, the oils that are employed include those conventionally used as extender oils, which are described above.

All ingredients of the rubber compositions can be mixed with standard mixing equipment such as Banbury or Brabender mixers, extruders, kneaders, and two-rolled mills. In one or more embodiments, the ingredients are mixed in two or more stages. In the first stage (often referred to as the masterbatch mixing stage), a so-called masterbatch, which typically includes the rubber component and filler, is prepared. To prevent premature vulcanization (also known as scorch), the masterbatch may exclude vulcanizing agents. The masterbatch may be mixed at a starting temperature of from about 25 °C to about 125 °C with a discharge temperature of about 135 °C to about 180 °C. Once the masterbatch is prepared, the vulcanizing agents may be introduced and mixed into the masterbatch in a final mixing stage, which is typically conducted at relatively low temperatures so as to reduce the chances of premature vulcanization. Optionally, additional mixing

stages, sometimes called remills, can be employed between the masterbatch mixing stage and the final mixing stage. One or more remill stages are often employed where the rubber composition includes silica as the filler. Various ingredients including the polymers of this invention can be added during these remills.

The mixing procedures and conditions particularly applicable to silica-filled tire formulations are described in U.S. Patent Nos. 5,227,425; 5,719,207; and 5,717,022, as well as European Patent No. 890,606, all of which are incorporated herein by reference. In one embodiment, the initial masterbatch is prepared by including the polymer and silica in the substantial absence of coupling agents and shielding agents.

The rubber compositions prepared from the polymers of this invention are particularly useful for forming tire components such as treads, subtreads, sidewalls, body ply skims, bead filler, and the like. In one or more embodiments, these tread or sidewall formulations may include from about 10% to about 100% by weight, in other embodiments from about 35% to about 90% by weight, and in other embodiments from about 50% to about 80% by weight of the polymer of this invention based on the total weight of the rubber within the formulation.

Where the rubber compositions are employed in the manufacture of tires, these compositions can be processed into tire components according to ordinary tire manufacturing techniques including standard rubber shaping, molding and curing techniques. Typically, vulcanization is effected by heating the vulcanizable composition in a mold; *e.g.,* it may be heated to about 140 °C to about 180 °C. Cured or crosslinked rubber compositions may be referred to as vulcanizates, which generally contain three-dimensional polymeric networks that are thermoset. The other ingredients, such as fillers and processing aids, may be evenly dispersed throughout the crosslinked network. Pneumatic tires can be made as discussed in U.S. Patent Nos. 5,866,171; 5,876,527; 5,931,211; and 5,971,046.

## EXAMPLES

Several polymers samples were prepared in a 378.5 liter reactor equipped with a heating/cooling jacket and agitator blades. Butyl lithium was used to anionically initiate the random polymerization of butadiene and styrene with hexanes within a polymerization mixture that included about 18 wt % monomer. The targeted base molecular weight was 215 kg/mol (polystyrene standard), which was achieved based upon the butyl lithium charge. The ratio of styrene to butadiene was adjusted to achieve polymers with 10 wt % styrene with a balance of butadiene. The vinyl content was targeted at 41.5 wt % of the butadiene mer units, which was achieved by using 2,2-di(tetrahydrofuryl)propane as a vinyl modifier. For example, in one or more samples, 35.397 kg of hexane, 7.579 kg of 33.0 wt % weight styrene in hexane, and 135.669 kg of 21.2 wt % weight butadiene in hexane were initially charged to the reactor, and then 0.511 kg of 3 wt % butyl lithium was added followed by 0.012 kg of 2,2-di(tetrahydrofuryl)propane. It should be understood that this is merely exemplary and the various ingredients *(e.g.,* butyl lithium) were manipulated in the samples to achieve the properties recited in Table I.

The monomer and solvent were charged to the reactor at room temperature, agitated, and heated to a stabilized temperature of 33 °C. External heating was then discontinued and the butyl lithium initiator was charged form a polymerization mixture. The polymerization mixture was allowed to exothermically peak, which generally occurred at about 23 minutes from butyl lithium charge, and the polymerization mixture was thermostated at about 85 °C using a cooling jacket.

Within about 5 minutes of the peak polymerization temperature, the reactor was charged with 3-(1,3 dimethylbutylidene)aminopropyltriethoxysilane (DMAPT) in the amounts provided in Table I. The polymerization mixture was continually agitated for about 30 minutes, and then a blend of ethylhexanoic acid (EHA) and octyltriethoxysilane (OTES) was charged to the reactor in amounts as proved in Table I. Then, 0.252 kg of butylated hydroxytoluene (BHT) was charged. At this point in the process, samples were extracted for analysis of peak molecular weight by GPC with polystyrene standards and polystyrene Mark Houwink constants (which analysis was also used to determine % Coupling), as well as Mooney viscosity ($ML_{1+4}$@ 100 °C). Polymer analyzed at this point in the process may be referred to as "blend tank" *(e.g.,* blend tank Mooney). For purposes of this specification and invention, blend tank Mooney and Mooney at desolventization are deemed to be equivalent.

The polymerization mixture was then transferred to a water-based desolventization process. Specifically, a tank including water was heated to a temperature of about 82 °C. The polymerization mixture was slowly added to this tank, which caused the hexanes to volatilize; the volatiles were collected within a condenser. The polymer coagulated in the presence of the water to form a coagulated polymer dispersion. The polymer was then dewatered by passing the polymer-water mixture through a grinder (i.e. a single screw extruder equipped with a perforated die). The dewatered polymer was then dried in an oven at 71 °C for one hour and then heated in the oven at 60 °C until dry (*e.g.* a water content of less than about 0.5 wt %). Following drying, the polymer was baled and Mooney viscosity ($ML_{1+4}$@ 100 °C) was measured to provide Bale Raw Mooney. Samples of the bale were aged by placing them in an oven for 48 hours at 100 °C. The Mooney viscosity ($ML_{1+4}$@ 100 °C) of these aged samples was then measured.

Table I

| Sample | Spec | Base Mp (k) (PS) | Amount of S340 (BuLi Equiv) | Amount of OTES (BuLi Equiv) | Amounts of EHA (BuLi Equiv) | Blend Tank ML4 | Bale Raw ML4 | % Coupling | Aged ML4 |
|---|---|---|---|---|---|---|---|---|---|
| 1 | No | 209.4 | 0.60 | 1.00 | 2.00 | 57.30 | 76.7 | 60.1 | 126.0 |
| 2 | Yes | 245.6 | 0.40 | 4.00 | 2.00 | 86.65 | 88.0 | 63.6 | 95.2 |
| 3 | No | 226.2 | 0.60 | 6.00 | 2.00 | 64.75 | 86.2 | 51.1 | 107.0 |
| 4 | Yes | 205 | 0.60 | 4.00 | 2.00 | 57.89 | 78.3 | 73.6 | 92.4 |
| 5 | Yes | 191.9 | 0.60 | 4.00 | 2.00 | 50.85 | 78.4 | 77.5 | 85.5 |
| 6 | No | 214 | 0.60 | 4.00 | 2.00 | 83.76 | 94.6 | 61.9 | 158.7 |
| 7 | No | 220.2 | 0.60 | 4.00 | 2.00 | 57.04 | 89.8 | 63.3 | 138.8 |
| 8 | No | 206.5 | 0.60 | 4.00 | 4.00 | 71.67 | 81.3 | 63.1 | 93.4 |
| 9 | Yes | 208 | 0.60 | 4.00 | 1.00 | 33.56 | 90.8 | 61.3 | 144.8 |
| 10 | No | 215.7 | 0.60 | 4.00 | 2.00 | 49.18 | 71.0 | 41.8 | 110.9 |
| 11 | No | 214 | 0.60 | 4.00 | 4.00 | 79.04 | 81.2 | 59.6 | 115.5 |
| 12 | No | 205 | 0.60 | 4.00 | 2.00 | 54.70 | 89.9 | 63.2 | 111.2 |
| 13 | No | 180 | 0.70 | 4.00 | 2.00 | 39.98 | 69.5 | 67.92 | 102.4 |
| 14 | No | 221.3 | 0.65 | 4.00 | 2.00 | 76.03 | 95.2 | 58.79 | 143.5 |
| 15 | No | 222 | 0.70 | 4.00 | 2.00 | 54.62 | 79.3 | 62.75 | 160.8 |
| 16 | Yes | 198.2 | 0.50 | 4.00 | 2.00 | 66.49 | 79.6 | 63.84 | 94.5 |
| 17 | No | 246.8 | 0.40 | 4.00 | 2.00 | 95.36 | 109.6 | 59.01 | 152.1 |
| 18 | No | 245.2 | 0.60 | 4.00 | 2.00 | 86.75 | 98.5 | 64.26 | 160.8 |
| 19 | Yes/No | 187.3 | 0.60 | 4.00 | 2.00 | 49.87 | 62.9 | 59.77 | 90.4 |
| 20 | No | 211.3 | 0.60 | 4.00 | 2.00 | 68.48 | 82.0 | 65.02 | 126.8 |
| 21 | Yes | 198.2 | 0.60 | 4.00 | 2.00 | 54.95 | 67.5 | 60.6 | 102.3 |
| 22 | Yes | 183.4 | 0.60 | 4.00 | 2.00 | 51.00 | 57.9 | 58.04 | 89.2 |
| 23 | Yes | 225 | 0.60 | 6.00 | 2.00 | 56.17 | 95.4 | 76.3 | 108.1 |
| 24 | Yes | 233.9 | 0.60 | 6.00 | 2.00 | 59.93 | 86.8 | 72.9 | 96.8 |
| 25 | No | 237.3 | 0.60 | 6.00 | 2.00 | 68.89 | 101.3 | 75.4 | 120.0 |
| 26 | No | 237.3 | 0.60 | 6.00 | 2.00 | 65.04 | 96.0 | 73.8 | 108.7 |
| 27 | No | 246.2 | 0.60 | 6.00 | 2.00 | 59.57 | 90.2 | 71.1 | 106.7 |
| 28 | Yes | 244.4 | 0.60 | 6.00 | 2.00 | 61.75 | 91.8 | 73.1 | 102.1 |
| 29 | No | 233.9 | 0.60 | 6.00 | 2.00 | 75.56 | 98.2 | 70.7 | 136.4 |
| 30 | No | 275.1 | 0.60 | 6.00 | 2.00 | 80.00 | 117.4 | 70.5 | 142.2 |
| 31 | No | 235.6 | 0.60 | 6.00 | 2.00 | 82.63 | 101.4 | 71.8 | 125.9 |
| 32 | No | 219 | 0.60 | 6.00 | 2.00 | 64.79 | 87.4 | 66.7 | 112.1 |
| 33 | No | 195 | 0.60 | 6.00 | 2.00 | 47.59 | 78.3 | 72.1 | 86.3 |
| 34 | No | 228.8 | 0.30 | 6.00 | 2.00 | 41.20 | 47.7 | 70 | 48.7 |
| 35 | No | 225 | 0.80 | 6.00 | 2.00 | 65.26 | 94.4 | 73.4 | 116.0 |
| 36 | No | 225.4 | 0.70 | 8.00 | 2.00 | 52.56 | 74.0 | 40.815 | 125.3 |
| 37 | No | 238.5 | 0.70 | 8.00 | 2.00 | 52.02 | 82.6 | 37.9 | 123.5 |

(continued)

| Sample | Spec | Base Mp (k) (PS) | Amount of S340 (BuLi Equiv) | Amount of OTES (BuLi Equiv) | Amounts of EHA (BuLi Equiv) | Blend Tank ML4 | Bale Raw ML4 | % Coupling | Aged ML4 |
|---|---|---|---|---|---|---|---|---|---|
| 38 | No | 198.3 | 0.70 | 8.00 | 2.00 | 26.68 | 39.0 | 28.643 | 66.4 |
| 39 | No | 236.8 | 0.70 | 8.00 | 2.30 | 55.08 | 92.8 | 26.208 | 120.5 |
| 40 | No | 228.6 | 0.70 | 10.00 | 2.00 | 43.04 | 73.9 | 44.222 | 126.8 |
| 41 | No | 254.3 | 0.70 | 10.00 | 2.00 | 60.77 | 82.1 | 46.332 | 130.5 |
| 42 | No | 214.4 | 0.70 | 10.00 | 2.00 | 34.30 | 46.8 | 30.044 | 85.0 |
| 43 | No | 219 | 0.70 | 10.00 | 2.00 | 47.12 | 66.7 | 26.123 | 107.8 |
| 44 | No | 223.8 | 0.70 | 10.00 | 2.00 | 30.75 | 37.5 | 26.331 | 53.4 |
| 45 | No | 214.4 | 0.70 | 10.00 | 2.30 | 31.18 | 43.8 | 26.992 | 72.1 |
| 46 | No | 223.8 | 0.70 | 10.00 | 2.30 | 39.16 | 54.5 | 29.731 | 89.4 |
| 47 | No | 255.7 | 0.70 | 10.00 | 2.30 | 41.68 | 50.8 | 26.866 | 70.5 |
| 48 | No | 231.8 | 0.70 | 10.00 | 2.30 | 48.43 | 93.2 | 35.9 | 118.0 |
| 49 | No | 222.5 | 0.70 | 6.00 | 2.30 | 61.13 | 117.6 | 31.9 | 129.7 |
| 50 | No | 201.1 | 0.70 | 8.00 | 2.30 | 43.66 | 117.7 | 39.535 | 127.4 |

The data within Table I was analyzed by linear leased squares regression analysis using Minitab™. This analysis provided the formulas set forth above for predicting blend tank and aged Mooney with 95% confidence interval.

## Claims

1. A process for preparing a stabilized diene copolymer having terminal modification, the process comprising:

    (i) combining an organolithium compound, butadiene monomer, and styrene monomer, optionally together with a vinyl modifier, in a solvent to form a polymerization mixture, where said step of combining an organolithium compound, butadiene monomer, and styrene monomer, includes employing from 0.05 to 50 mmol butyl lithium per 100 gram of total monomer;
    (ii) allowing the monomer to polymerize and thereby form a living polymer, where said living polymer is **characterized by** a base Mp, which is determined by GPC using polystyrene standards and polystyrene Mark Houwink constants, of from 160 to 280 kg per mole;
    (iii) after said step of allowing the monomer to polymerize, introducing an imine-containing hydrocarbyloxy silane compound to the polymerization mixture, where said imine-containing hydrocarbyloxy silane is added in an amount from 0.2 to 0.8 mol per mole of organolithium compound, to thereby form a polymerization mixture including a modified polymer;
    (iv) after said step of introducing an imine-containing hydrocarbyloxy silane, introducing a hydrocarbyl hydrocarbyloxy silane to the polymerization mixture including the modified polymer to thereby form a stabilized polymerization mixture, where said hydrocarbyl hydrocarbyloxy silane is added in an amount from 1 to 12 mol per mole of organolithium compound;
    (v) introducing a condensation accelerator to the polymerization mixture including the modified polymer or to the stabilized polymerization mixture where the amount of condensation accelerator introduced is from 1.0 to 4.0 moles of condensation accelerator per mole of lithium; and
    (vi) desolventizing the polymer mixture to provide the stabilized diene copolymer having terminal modification,

    where the modified polymer within the stabilized polymerization mixture has a Mooney viscosity ($ML_{1+4}$@ 100 °C) of greater than 50.

2. The process of claim 1, where said step of desolventizing includes steam or water coagulation of the stabilized polymerization mixture to provide a wet polymer mass including the modified polymer, and drying the wet polymer

mass to provide a dried modified polymer.

3. The process of any of the preceding claims, where said step of allowing monomer to polymerize achieves a peak polymerization temperature, and where said step of introducing an amine-containing hydrocarbyloxy silane compound to the polymerization mixture takes place after said peak polymerization temperature.

4. The process of any of the preceding claims, where said living polymer is **characterized by** including from 5 to 45 wt % styrene mer units and a vinyl content of from 10 to 80 %.

5. The process of any of the preceding claims, where said polymerization mixture including a modified polymer includes from 10 to 80 mole % modified polymer.

6. The process of any of the preceding claims, where said amine-containing hydrocarbyloxy silane is selected from the group consisting of *N*-(1,3-dimethylbutylidene)-3-(triethoxysilyl)-1-propaneamine, *N*-(1-methylethylidene)-3-(triethoxysilyl)-1-propaneamine, *N*-ethylidene-3-(triethoxysilyl)-1-propaneamine, *N*-(1-methylpropylidene)-3-(triethoxysilyl)-1-propaneamine, or *N*-(4-N,N-dimethylaminobenzylidene)-3-(triethoxysilyl)-1-propaneamine. In particular embodiments, the imine-containing hydrocarbyloxy silane is *N*-(1-methylpropylidene)-3-(triethoxysilyl)-1-propaneamine, and *N*-(1,3-dimethylbutylidene)-3-(triethoxysilyl)-1-propaneamine.

7. The process of any of the preceding claims, where said step of introducing an amine-containing hydrocarbyloxy silane includes adding the amine-containing hydrocarbyloxy silane to the polymerization mixture in an amount from 0.3 to 0.7 mole per mole of organolithium compound.

8. The process of any of the preceding claims, where said hydrocarbyl hydrocarbyloxy silane is selected from the group consisting of trihydrocarbyl hydrocarbyloxy silanes, dihydrocarbyl dihydrocarbyloxy silanes, hydrocarbyl trihydrocarbyloxy silanes, and tetrahydrocarbyloxy silanes.

9. The process of any of the preceding claims, where said step of introducing a hydrocarbyl hydrocarbyloxy silane includes introducing from 3 to 10 mole per mole of organolithium compound.

10. The process of any of the preceding claims, where said process is manipulated to provide a modified polymer within the stabilized polymerization mixture that satisfies the formula:

Mooney Viscosity at Desolventization = 44.7 + [0.5218 Base Mp] - [5.1 Functionalizing Agent Equivalents] - [4.765 Stabilizing Agent Equivalents] + [8.86 Condensation Accelerator Equivalents]

where Mooney Viscosity at Desolventization is greater than or equal to 50, Mp is 160 to 280 kg/mol, the Functionalizing Agent Equivalents is from 0.2 to 0.8 mole per mole of organolithium compound, the Stabilizing Agent Equivalents is from 1 to 12 mole per mole of organolithium compound, and the Condensation Accelerator Equivalents is from 1 to 4 mole per mole of organolithium compound.

11. The process of any of the preceding claims, where said stabilized diene copolymer, after heat aging for 48 hours at 100 °C, is **characterized by** a Mooney viscosity ($ML_{1+4}$@ 100 °C) of less than 120 and the processes conducted to satisfy the following formula:

Mooney After Aging = -34.2 + [0.828 Mooney Viscosity of Bale] + [0.348 Base Mp] - [0.425 % Coupling] + [98.9 Functionalizing Agent Equivalents] - [6.16 Stabilizing Agent Equivalents]

where Mooney After Aging is less than or equal to 120, the Mooney Viscosity of the Bale is from 35 to 120, the Mp is from 160 to 280 kg per mole, the % Coupling is from 20 to 80%, the Functionalizing Agent Equivalents is from 0.2 to 0.8 mole per mole of organolithium compound, and the Stabilizing Agent Equivalents is from 1 to 12 mole per mole of lithium.

## Patentansprüche

1. Verfahren zum Herstellen eines stabilisierten Diencopolymers, das endständige Modifikation aufweist, das Verfahren umfassend:

(i) Kombinieren einer Organolithiumverbindung, eines Butadienmonomers und eines Styrolmonomers, optional zusammen mit einem Vinylmodifizierer, in einem Lösemittel, um eine Polymerisationsmischung zu bilden, wobei der Schritt des Kombinierens einer Organolithiumverbindung, eines Butadienmonomers und eines Styrolmonomers ein Einsetzen von 0,05 bis 50 mmol Butyllithium pro 100 Gramm Gesamtmonomer einschließt;
(ii) Ermöglichen dem Monomer zu polymerisieren, und dadurch ein lebendes Polymer zu bilden, wobei das lebende Polymer **durch** ein Basis-Mp, das durch GPC unter Verwendung von Polystyrolstandards und Polystyrol-Mark-Houwink-Konstanten bestimmt wird, von 160 bis 280 kg pro Mol **gekennzeichnet** ist;
(iii) nach dem Schritt des Ermöglichens dem Monomer zu polymerisieren, Einbringen einer iminhaltigen Hydrocarbyloxysilanverbindung in die Polymerisationsmischung, wobei das iminhaltige Hydrocarbyloxysilan in einer Menge von 0,2 bis 0,8 mol pro Mol Organolithiumverbindung zugegeben wird, um dadurch eine Polymerisationsmischung, einschließlich eines modifizierten Polymers, zu bilden;
(iv) nach dem Schritt des Einbringens eines iminhaltigen Hydrocarbyloxysilans, Einbringen eines Hydrocarbylhydrocarbyloxysilans in die Polymerisationsmischung, einschließlich des modifizierten Polymers, um dadurch eine stabilisierte Polymerisationsmischung zu bilden, wobei das Hydrocarbylhydrocarbyloxysilan in einer Menge von 1 bis 12 mol pro Mol Organolithiumverbindung zugegeben wird;
(v) Einbringen eines Kondensationsbeschleunigers in die Polymerisationsmischung, einschließlich des modifizierten Polymers, oder in die stabilisierte Polymerisationsmischung, wobei die Menge von eingebrachtem Kondensationsbeschleuniger von 1,0 bis 4,0 Mol Kondensationsbeschleuniger pro Mol Lithium beträgt; und
(vi) Entfernen von Lösemittel aus der Polymermischung, um das stabilisierte Diencopolymer, das eine endständige Modifikation aufweist, bereitzustellen,

wobei das modifizierte Polymer innerhalb der stabilisierten Polymerisationsmischung eine Mooney-Viskosität ($ML_{1+4}$@ 100 °C) von größer als 50 aufweist.

**2.** Verfahren nach Anspruch 1, wobei der Schritt des Entfernens von Lösemittel eine Dampf- oder Wasserkoagulation der stabilisierten Polymerisationsmischung, um eine nasse Polymermasse, einschließlich des modifizierten Polymers, bereitzustellen, und ein Trocknen der nassen Polymermasse, um ein getrocknetes modifiziertes Polymer bereitzustellen, einschließt.

**3.** Verfahren nach einem der vorstehenden Ansprüche, wobei der Schritt des Ermöglichens dem Monomer zu polymerisieren eine Spitzenpolymerisationstemperatur erreicht, und wobei der Schritt des Einbringens einer aminhaltigen Hydrocarbyloxysilanverbindung in die Polymerisationsmischung nach der Spitzenpolymerisationstemperatur stattfindet.

**4.** Verfahren nach einem der vorstehenden Ansprüche, wobei das lebende Polymer **durch** einschließlich von 5 bis 45 Gew.-% Styrolmereinheiten und einen Vinylgehalt von 10 bis 80 % **gekennzeichnet** ist.

**5.** Verfahren nach einem der vorstehenden Ansprüche, wobei die Polymerisationsmischung, einschließlich eines modifizierten Polymers, von 10 bis 80 Mol-% modifiziertes Polymer einschließt.

**6.** Verfahren nach einem der vorstehenden Ansprüche, wobei das aminhaltige Hydrocarbyloxysilan aus der Gruppe ausgewählt ist, bestehend aus *N*-(1,3-Dimethylbutyliden)-3-(triethoxysilyl)-1-propanamin, *N*-(1-Methylethyliden)-3-(triethoxysilyl)-1-propanamin, *N*-Ethyliden-3-(triethoxysilyl)-1-propanamin, *N*-(1-Methylpropyliden)-3-(triethoxysilyl)-1-propanamin oder *N*-(4-N,N-Dimethylaminobenzyliden)-3-(triethoxysilyl)-1-propanamin. In besonderen Ausführungsformen ist das iminhaltige Hydrocarbyloxysilan *N*-(1-Methylpropyliden)-3-(triethoxysilyl)-I-propaneamin und *N*-(1,3-Dimethylbutyliden)-3-(triethoxysilyl)-I-propaneamin.

**7.** Verfahren nach einem der vorstehenden Ansprüche, wobei der Schritt des Einbringens eines aminhaltigen Hydrocarbyloxysilans das Zugeben des aminhaltigen Hydrocarbyloxysilans zu der Polymerisationsmischung in einer Menge von 0,3 bis 0,7 Mol pro Mol Organolithiumverbindung einschließt.

**8.** Verfahren nach einem der vorstehenden Ansprüche, wobei das Hydrocarbylhydrocarbyloxysilan aus der Gruppe ausgewählt ist, bestehend aus Trihydrocarbylhydrocarbyloxysilanen, Dihydrocarbyldihydrocarbyloxysilanen, Hydrocarbyltrihydrocarbyloxysilanen und Tetrahydrocarbyloxysilanen.

**9.** Verfahren nach einem der vorstehenden Ansprüche, wobei der Schritt des Einbringens eines Hydrocarbylhydrocarbyloxysilans das Einbringen von 3 bis 10 Mol pro Mol Organolithiumverbindung einschließt.

**10.** Verfahren nach einem der vorstehenden Ansprüche, wobei das Verfahren manipuliert wird, um innerhalb der stabilisierten Polymerisationsmischung ein modifiziertes Polymer bereitzustellen, das die Formel erfüllt:

Mooney-Viskosität bei Entfernung von Lösemittel= 44,7 + [0,5218 Basis-Mp] - [5,1 Funktionalisierungsmittel-Äquivalente] - [4,765 Stabilisierungsmittel-Äquivalente] + [8,86 Kondensationsbeschleuniger-Äquivalente]

wobei die Mooney-Viskosität bei Entfernung von Lösemittel größer als oder gleich 50 ist, Mp 160 bis 280 kg/mol beträgt, die Funktionalisierungsmittel-Äquivalente 0,2 bis 0,8 Mol pro Mol Organolithiumverbindung betragen, die Stabilisierungsmittel-Äquivalente 1 bis 12 Mol pro Mol Organolithiumverbindung betragen und die Kondensationsbeschleuniger-Äquivalente 1 bis 4 Mol pro Mol Organolithiumverbindung betragen.

**11.** Verfahren nach einem der vorstehenden Ansprüche, wobei das stabilisierte Diencopolymer nach Wärmealterung für 48 Stunden bei 100 °C **durch** eine Mooney-Viskosität ($ML_{1+4}$@ 100 °C) von weniger als 120 und die durchgeführten Verfahren **gekennzeichnet** ist, um die folgende Formel zu erfüllen:

Mooney nach Alterung = -34,2 + [0,828 Mooney-Viskosität von Ballen] + [0,348 Basis Mp] - [0,425 % Kopplung] + [98,9 Funktionalisierungsmittel-Äquivalente] - [6,16 Stabilisierungsmittel-Äquivalente]

wobei Mooney nach Alterung kleiner als oder gleich 120 ist, die Mooney-Viskosität von Ballen 35 bis 120 beträgt, das Mp 160 bis 280 kg pro Mol beträgt, der % Kopplung 20 bis 80 % beträgt, die Funktionalisierungsmittel-Äquivalente 0,2 bis 0,8 Mol pro Mol Organolithiumverbindung betragen und die Stabilisierungsmittel-Äquivalente 1 bis 12 Mol pro Mol Lithium betragen.

## Revendications

**1.** Procédé permettant de préparer un copolymère diénique stabilisé ayant une modification terminale, le procédé comprenant :

(i) la combinaison d'un composé organolithien, d'un monomère butadiène et d'un monomère styrène, facultativement conjointement avec un modificateur vinyle, dans un solvant pour former un mélange de polymérisation, où ladite étape de combinaison d'un composé organolithien, d'un monomère butadiène et d'un monomère styrène, comporte le recours à 0,05 à 50 mmol de butyl-lithium pour 100 grammes de monomère total ;
(ii) le fait de laisser le monomère polymériser et former de ce fait un polymère vivant, où ledit polymère vivant est **caractérisé par** une Mp de base, qui est déterminée par CPG à l'aide d'étalons en polystyrène et de constantes de Mark Houwink de polystyrène, allant de 160 à 280 kg par mole ;
(iii) après ladite étape consistant à laisser polymériser le monomère, l'introduction d'un composé hydrocarbyloxysilane contenant une imine au mélange de polymérisation, où ledit hydrocarbyloxysilane contenant une imine est ajouté en une quantité allant de 0,2 à 0,8 mol par mole de composé organolithien, pour former de ce fait un mélange de polymérisation comportant un polymère modifié ;
(iv) après ladite étape d'introduction d'un hydrocarbyloxysilane contenant une imine, l'introduction d'un hydrocarbyl-hydrocarbyloxysilane au mélange de polymérisation comportant le polymère modifié pour former de ce fait un mélange de polymérisation stabilisé, où ledit hydrocarbyl-hydrocarbyloxysilane est ajouté en une quantité allant de 1 à 12 mol par mole de composé organolithien ;
(v) l'introduction d'un accélérateur de condensation au mélange de polymérisation comportant le polymère modifié ou au mélange de polymérisation stabilisé où la quantité d'accélérateur de condensation introduite va de 1,0 à 4,0 moles d'accélérateur de condensation par mole de lithium ; et
(vi) la désolvantation du mélange polymère pour fournir le copolymère diénique stabilisé ayant une modification terminale,

où le polymère modifié au sein du mélange de polymérisation stabilisé a une viscosité Mooney ($ML_{1+4}$ à 100 °C) supérieure à 50.

**2.** Procédé selon la revendication 1, où ladite étape de désolvantation comporte une coagulation à la vapeur ou à l'eau du mélange de polymérisation stabilisé pour fournir une masse polymère humide comportant le polymère modifié, et le séchage de la masse polymère humide pour fournir un polymère modifié séché.

**3.** Procédé selon l'une quelconque des revendications précédentes, où ladite étape consistant à laisser polymériser le

monomère atteint une température de polymérisation maximale, et où ladite étape d'introduction d'un composé hydrocarbyloxysilane contenant une amine au mélange de polymérisation se déroule après ladite température de polymérisation maximale.

**4.** Procédé selon l'une quelconque des revendications précédentes, où ledit polymère vivant est **caractérisé par** l'inclusion de 5 à 45 % en poids de motifs monomères styrène et d'une teneur en vinyle allant de 10 à 80 %.

**5.** Procédé selon l'une quelconque des revendications précédentes, où ledit mélange de polymérisation comportant un polymère modifié comporte de 10 à 80 % molaires de polymère modifié.

**6.** Procédé selon l'une quelconque des revendications précédentes, où ledit hydrocarbyloxysilane contenant une amine est choisi dans le groupe constitué de *N*-(1,3-diméthylbutylidène)-3-(triéthoxysilyl)-1-propane-amine, *N*-(1-méthyléthylidène)-3-(triéthoxysilyl)-1-propaneamine, *N*-éthylidène-3-(triéthoxysilyl)-1-propaneamine, *N*-(1-méthylpropylidène)-3-(triéthoxysilyl)-1-propane-amine, ou *N*-(4-N,N-diméthylaminobenzylidène)-3-(triéthoxysilyl)-1-propane-amine. Dans des modes de réalisation particuliers, l'hydrocarbyloxysilane contenant une imine est *N*-(1-méthylpropylidène)-3-(triéthoxysilyl)-1-propane-amine, et *N*-(1,3-diméthylbutylidène)-3-(triéthoxysilyl)-1-propane-amine.

**7.** Procédé selon l'une quelconque des revendications précédentes, où ladite étape d'introduction d'un hydrocarbyloxysilane contenant une amine comporte l'ajout de l'hydrocarbyloxysilane contenant une amine au mélange de polymérisation en une quantité allant de 0,3 à 0,7 mole par mole de composé organolithien.

**8.** Procédé selon l'une quelconque des revendications précédentes, où ledit hydrocarbyl-hydrocarbyloxysilane est choisi dans le groupe constitué de trihydrocarbyl-hydrocarbyloxysilanes, dihydrocarbyl-dihydrocarbyloxysilanes, hydrocarbyl-trihydrocarbyloxysilanes et tétrahydrocarbyloxysilanes.

**9.** Procédé selon l'une quelconque des revendications précédentes, où ladite étape d'introduction d'un hydrocarbyl-hydrocarbyloxysilane comporte l'introduction de 3 à 10 moles par mole de composé organolithien.

**10.** Procédé selon l'une quelconque des revendications précédentes, où ledit procédé est manipulé pour fournir un polymère modifié au sein du mélange de polymérisation stabilisé qui respecte la formule :

Viscosité Mooney à la désolvantisation = 44,7 + [0,5218 Mp de base] - [5,1 équivalents d'agent de fonctionnalisation] - [4,765 équivalents d'agent stabilisant] + [8,86 équivalents d'accélérateur de condensation]

où la viscosité Mooney à la désolvantisation est supérieure ou égale à 50, Mp va de 160 à 280 kg/mol, les équivalents d'agent de fonctionnalisation vont de 0,2 à 0,8 mole par mole de composé organolithien, les équivalents d'agent stabilisant vont de 1 à 12 moles par mole de composé organolithien, et les équivalents d'accélérateur de condensation vont de 1 à 4 moles par mole de composé organolithien.

**11.** Procédé selon l'une quelconque des revendications précédentes, où ledit copolymère diénique stabilisé, après vieillissement à la chaleur pendant 48 heures à 100 °C, est **caractérisé par** une viscosité Mooney ($ML_{1+4}$ à 100 °C) inférieure à 120 et les procédés sont effectués pour respecter la formule suivante :

Mooney après vieillissement = -34,2 + [0,828 viscosité Mooney de balle] + [0,348 Mp de base] - [0,425 % de couplage] + [98,9 équivalents d'agent de fonctionnalisation] - [6,16 équivalents d'agent stabilisant]

où la Mooney après vieillissement est inférieure ou égale à 120, la viscosité Mooney de la balle va de 35 à 120, la Mp va de 160 à 280 kg par mole, le % de couplage va de 20 à 80 %, les équivalents d'agent de fonctionnalisation vont de 0,2 à 0,8 mole par mole de composé organolithien, et les équivalents d'agent stabilisant vont de 1 à 12 moles par mole de lithium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 6369167 B
- US 7683151 B
- US 6255404 B
- WO 2018125733 A1
- WO 2015089356 A2
- US 20140031471 A
- US 4429091 A
- US 9868795 B
- US 20050159554 A
- US 3842111 A
- US 3873489 A
- US 3978103 A
- US 3997581 A
- US 4002594 A
- US 5580919 A
- US 5583245 A
- US 5663396 A
- US 5674932 A
- US 5684171 A
- US 5684172 A
- US 5696197 A
- US 6608145 B
- US 6667362 B
- US 6579949 B
- US 6590017 B
- US 6525118 B
- US 6342552 B
- US 6683135 B
- US 5227425 A
- US 5719207 A
- US 5717022 A
- EP 890606 A
- US 5866171 A
- US 5876527 A
- US 5931211 A
- US 5971046 A

### Non-patent literature cited in the description

- **HSIEH, H. L.** ; **QUIRK, R. P.** Anionic Polymerization: Principles and Practical Applications. Marcel Dekker, 1996
- **HADJICHRISTIDIS, N.** ; **PITSIKALIS, M.** ; **PISPAS, S.** ; **IATROU, H.** *Chem. Rev.*, 2001, vol. 101 (12), 3747-3792
- The Compounding and Vulcanization of Rubber. Rubber Technology. 1973
- *J. Am. Chem. Soc.*, 1939, vol. 60 (2), 309-319
- **KIRK-OTHMER**. *ENCYCLOPEDIA OF CHEMICAL TECHNOLOGY*, 1982, vol. 20, 365-468
- *Vulcanization Agents and Auxiliary Materials*, 390-402
- **A.Y. CORAN**. Vulcanization. *ENCYCLOPEDIA OF POLYMER SCIENCE AND ENGINEERING*, 1989